# EUROPEAN PATENT APPLICATION

(11) **EP 3 766 800 A1**
(43) Date of publication of application: **20.01.2021**
(21) Application number: 20186313.1
(22) Date of filing: 16.07.2020
(51) Int. Cl.: B65D 75/32

(54) **UV LIGHT MANAGEMENT PACKAGE AND PROTECTIVE COVER**

(30) Priority: 17.07.2019 US 201916514437; 15.06.2020 US 202016901097
(71) Applicant: Johnson & Johnson Vision Care, Inc., Jacksonville, FL 32256 (US)
(72) Inventor: SWAMY, Jay, Jacksonville, FL Florida 32256 (US); DEFREITAS GONZALEZ, Melissa, Jacksonville, FL Florida 32256 (US); ANSELL, Scott, Jacksonville, FL Florida 32256 (US); ABRAMS, Rick, Jacksonville, FL Florida 32256 (US); LUST, Victor, Jacksonville, FL Florida 32256 (US)
(74) Representative: Kirsch, Susan Edith

(57) **Abstract**

There is described a contact lens package containing a bowl (210) for holding a contact lens. The bowl is sealed by a film engaging the bowl so as to hold a contact lens between said bowl and the film. A lens is placed in saline between the bowl and the film. Finally, there is contained a light management protective cover (100) attached to the bowl. This controls the type of light which passes through said cover and onto said bowl. Typically, the cover (100) is impervious to ultraviolet light.

## Description

### Related Application

This application is a continuation in part of Serial Number 16/514437, filed July 17, 2019, which is incorporated by reference herein, in its entirety.

### Background of the Invention

The present invention relates to packages used by consumers of contact lenses. More specifically, the present package helps inhibit the transmittance of ultraviolet light through the package and thus protect contact lens from UV exposure. This attribute will be useful for packaging contact lenses that contain any light or UV sensitive compounds such as a drug and/or light sensitive compounds such as photochromic compounds. It is perceived that exposure of ultraviolet or visible light to the lens may cause the light sensitive compound's efficacy to be compromised, not as a danger to the user, but for its loss of unique product benefits.

### Description of the Drawings

Figure 1 is a perspective drawing of a contact lens package cover for use with a contact lens blister bowl as in Figures 1B and 1C (pan and elevation view respectively, without the cover), made according to the description of the invention contained herein;
Figure 2 is a perspective drawing of a modification to the package of Figure 1;
Figures 3A. 3B and 3C are further modifications of the present invention wherein the cover is ultrasonically welded to the package;
Figures 4A, 4B and 4C are modifications of the cover of Figures 3A, 3B and 3C;
Figure 5 describes a further configuration of the attachment of the cover to the package; and
Figures 6A and 6B describe still other modifications of the attachment to the cover of the lens package.

### Description of the Invention

Contact lenses are currently expanding in their choices of offerings, so that product portfolio will include contact lenses containing light or UV absorbing compounds, such as photochromic contact lenses, or high energy visible (HEV) light absorbing contact lenses some of which are light sensitive.

For example, current primary packaging (polypropylene blister and foil laminated lidstock) does not protect against transmission of UV or visible light and may allow the potential activation of the photochromic lens, resulting in photo-fatigue of the lens and loss of its efficacy.

Another example of light sensitivity includes a contact lens containing a photosensitive compound (such as an HEV light absorbing compound) that exhibits photodegradation when exposed to UV light. Light sensitivity may be demonstrated by a change in average transmission of at least 2 percent over a wavelength range of 400 to 450 nm. Various methods of exposure may be used. A preferred method of light exposure is that described by the International Conference on Harmonisation (ICH) of Technical Requirements for Registration of Pharmaceuticals for Human Use guideline, Q1B Photostability Testing of New Drug Substances and Products, published on November 1996. Preferably, the exposure is conducted under the ICH Photostability Guideline using an Option 2 light source with an estimated illuminance exposure of 1.5192 x 10⁶ Lux hours (168.8 hours exposure time) and an estimated ultraviolet irradiation exposure of 259.4 Watt hours/m² (16.2 hours exposure time), preferably in a photostability chamber that is controlled at 25 ºC/Amb RH. After exposure, the UV/Vis spectrum of the sample is collected and compared to the spectrum of a sample that has been protected from exposure. By way of example, contact lenses containing photosensitive compounds according to the invention, after exposure to light under ICH guideline Q1B conditions (sometimes shortened herein to " ICH guideline Q1B" or "Q1B conditions") as described above, exhibit at least a 2 percent, or at least a 5 percent, or at least a 7 percent, or at least a 10 percent, change in their average transmission over a wavelength range of 400 to 450 nm. Such changes may be calculated as the absolute value of the difference between the average transmission (over the indicated wavelength range) with and without the light exposure.

"Photochromic compound" may be considered to be compounds that generally reversibly darken upon exposure to specific intensities and wavelengths of light.

Compounds that limit transmission of one or more wavelengths of high energy visible light through the lens, for instance in the range of 400 to 450 nm, may be considered "high energy visible light absorbing," or "HEV light absorbing" compounds. A material's ability to absorb certain wavelengths of light can be determined by measuring its UV/Vis transmission or absorbance spectrum.

UV light may be considered to be light with wavelength(s) in the range of 100 to 400 nm.

A "Light Management Protective Cover" (LMPC) was developed to address premature light exposure to photochromic and other light sensitive product. The LMPC is an attachable or adhered/bonded cover/shade used on current contact lens primary packaging surfaces to prevent/limit light exposure (including but not limited to UV) to its contents (including but not limited to contact lens).

In the present invention, a light management protective insert may be attached to a cover, such that the insert controls the type of light which passes through the insert and onto the cover. In this case, the cover may be a generally translucent cover. The cover may be placed over a bowl for holding a contact lens. Such an insert can be used on current contact lens primary packaging surfaces to prevent/limit light exposure (including but not limited to UV) to its contents (including but not limited to contact lens).

The LMPC is applied post-sterilization to the underside of the contact lens bowl and is intended to remain affixed to the outside of primary package. As a result, this invention will not impact the heat seal or sterilization processes used with the lens packaging, which are the two most important processing techniques utilized to ensure a sterile barrier packaging system. In addition, the LMPC cover does not come into contact with the packing solution or the physical lens itself and the primary package bowl offers sufficient barrier between the cover and the lens. Therefore, this solution mitigates concerns with respect to any material from the cover leaching into any of the interior of the package, the solution containing the lens, or into the lens itself - as all of these elements never come into contact with the LMPC. The cover which is combined with the light management protective insert may be applied in a corresponding manner as described herein in relation to the LMPC cover.

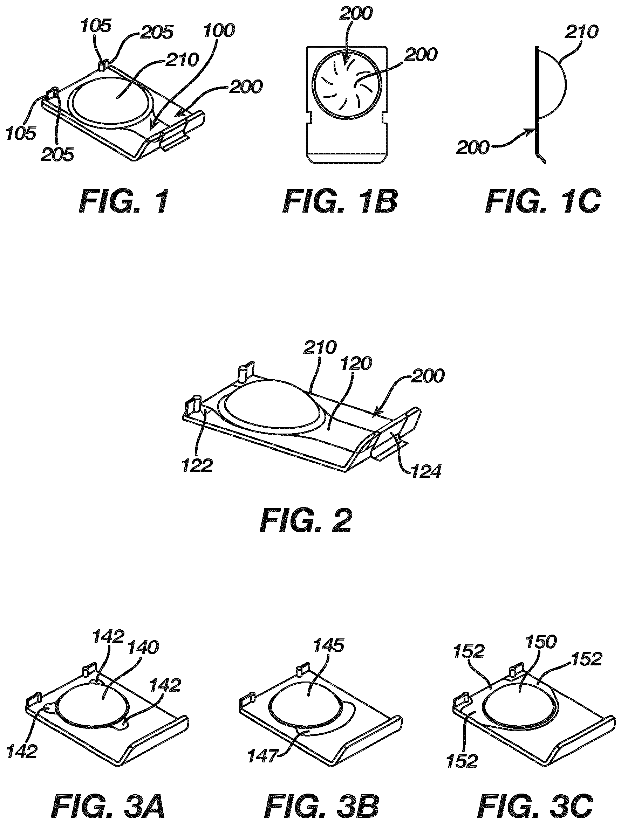

As seen in Figure 1, there is described a snap on cover 100 to be used with the standard contact lens package 200, as seen in Figure 1B. The cover 100 has a snap-on feature presented as tabs 105, placed at one end of the cover 100. These tabs 105 mate with the flanges 205 on package 200. The cover 100 thus is enabled to be attached to the bowl portion 210 of package 200, without creating a need to bond the cover 100 to the bowl 210 or, indeed the package 200.

As previously mentioned, the cover 100 may be opaque and block ultraviolet light, so that if there is a contact lens placed in bowl 210 such that the lens is light activated, the cover will prevent inadvertent activation of the lens, or alternately deterioration of a drug that is present in the lens.

Figure 2 describes a modification of the cover of Figure 1. As can be seen in Figure 2, there is described a cover 120 that contains snap on flanges 122, 124. These flanges 122, 124 are provided at either end 121, 123 of cover 120 - so that the cover 120 can be attached at both ends of the blister package 200, that is, the same package 200 which was featured in the description of the cover 100 of Figure 1. The modified design 120 of Figure 2 ensures a better contact between the cover 120 and package 200, and thereby reduces the probability of the passage of light therethrough. This feature enables the cover 120 to be attached to the bowl 210 of package 200, without having to create a bond of any sort between the cover 120 and the bowl 210.

Figures 3A, 3B and 3C describe further modifications of the foregoing designs. As seen in these Figures, the "snap on" features of covers 100, 120 are removed. Now, covers 140, 145 and 150 incorporate features for ultrasonic welding. These are described as tabs 142, 147, 152 seen in each of these three Figures. These modifications now further reduce the probability of lens exposure to light. As seen in Figures 3A, 3B and 3C, contact between covers 140, 145 or 150 with the bowl 210 is further enhanced, so that any snap-on features are eliminated. Each of the flanges 142, 147, 152 can be fusion bonded or welded to the bowl 210 by an ultrasonic or hot tip welding process, which are standard techniques known in the packaging industry.

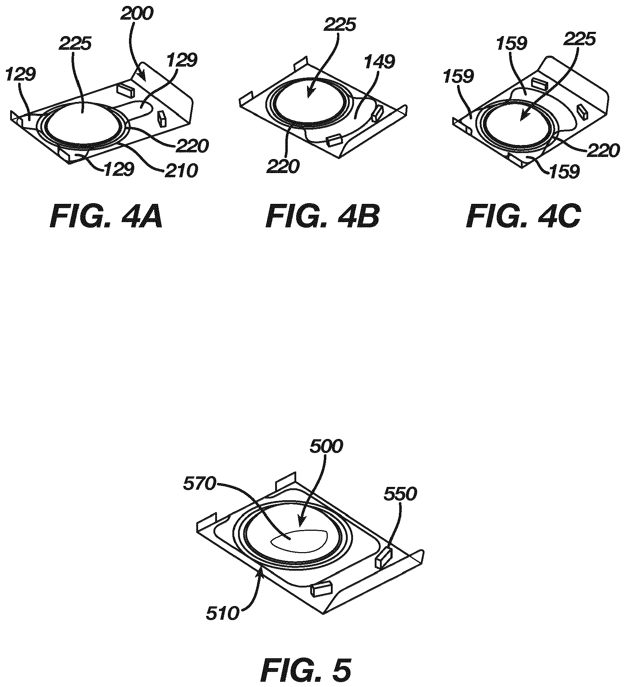

Figure 3A, 4B and 4C describe further modifications of the concepts of Figures 3A, 3B and 3C. Now, as can be seen in Figures 4A, 4B and 4C, there are provided larger weld spots, provided a distance apart from the heat seal ring 220 adjoining bowl 210 of the package 200. These extended wings or tails 129, 149, 159 enable welding of the cover 225 to the package bowl 210 apart from the heat seal ring 220. This feature ensures minimal damage to the already created heat seal bond between the bowl 210 and package lidstock and maintains a sterile barrier on the package 200. The lidstock is formed from a pressure formable foil, including laminated polyester and aluminum foil laminated composites. The term "film" may be used interchangeably with the term "lidstock" in the context of the invention.

Finally, Figure 5 demonstrates a "squared up" modification of the cover seen in Figure 4C, so that there is reduced potential for light seepage. The attachment of cover 500 to package 550 is provided such that there is an increased surface area for welding. This feature provides enhanced covering of the bowl 510, to make welding of bowl 510 to cover 500 even easier, and further apart from the heat seal ring.

As best seen in Figure 5, a cover and package 500, 550 is ideally styled for containing a photochromic contact lens. The package is configured to address and minimize UV exposure of the photochromic contact lenses. The preferred material for cover 500 is polypropylene with a UV blocker and TiO2. When used with typical contact lens packages formed from polypropylene and having a wall thickness of between 0.55mm and 0.85mm, the preferred material thickness of the cover 500 is roughly 0.375 mm. This allows the cover to be pliable yet sturdily attached to the package 550. It is understood however, that the thickness of cover 500 can be in the range of 0.025 mm to 1.0 mm to meet specific product requirements. As well, other materials are certainly possible, as well be explained below.

The scope of materials useful as the LMPC cover is contemplated to be quite broad. The material of choice should be compatible with the materials used in the primary package 550 and particularly bowl 510, so that a bond is formed between both materials when fusion bonded or welded. For instance, if the bowl 510 is made of polypropylene, the preferred material for use as the cover 500 is also polypropylene, although any other thermoplastic polymer, such as a propylene-based elastomer, a blend of polypropylene and polyethylene, EVA, etc. may be used. What is required is that the cover 500 is able to restrict passage of UV light.

Similarly, if the bowl 510 is made of a cyclic olefin polymer (COP), a preferred material option for LMPC cover 500 is also COP, but any other thermoplastic polymer such as a COP blend, a cyclic olefin copolymer (COC) or a COC blend, EVA, etc., or any other UV restricting material may be used. Depending on the product critical-to-quality requirements (CTQs) and the material composition of the primary package bowl 510, the cover 500 should contain a compatible thermoplastic resin with or without additives such as TiO₂, UV blocker, colored masterbatch, etc. The UV absorbers in cover 500 can be additives to the material such as benzotriazoles; benzophenones; triazines; or a combination of two or more of these additives. The light management protective insert may be made of any of the materials described herein in relation to the LMPC cover.

The cover 500 should be fixedly attached to the package 550. A preferred method of fixation is to bond the cover 500 to the blister package by thermally welding it thereto, such as by using a hot tool tip as an external heat source, in order to apply heat in specifically useful areas around the cover 500. Applying heat there will tend to minimally yet sufficiently melt the polymer from which the cover 500 is created, and thereby effectuate a mechanical bond between the surfaces of the cover 500 and the package 550. Naturally, it is contemplated that other means of attachment, such as forms of thermal attachment (laser, infrared) and friction (such as vibration, ultrasonic) bonding techniques may be utilized.

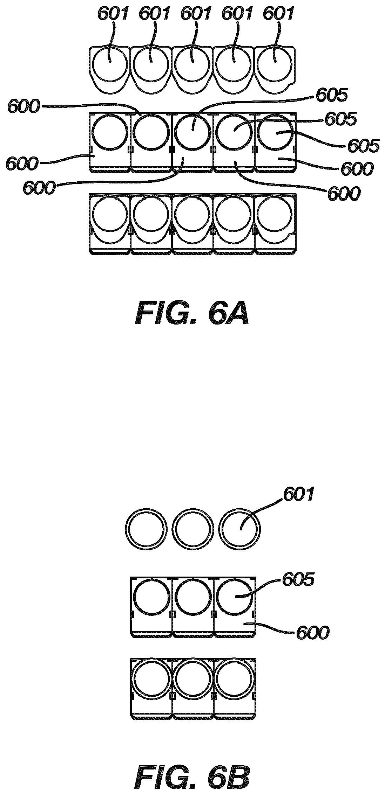

As can be seen in Figures 6A and 6B, there is described a further modification of the package of the present invention. Here, package 600 has a preformed cover 601 attached to the bowl 605. This cover 601 is typically made by injection molding. The cover 601 is typically attached to bowl 605 by laser welding, post-production. Of course, it is UV light impermeable, consistent with the disclosure of the present invention. Cover 601 is typically press fit into bowl 605, but alternately it may be laser or sonic welding to bowl 605. As can be seen in Figure 605, the configuration of the packages is such that a strip of packages 600 may be formed in production. Then covers 601 may be applied to the bowls 605 consecutively.

In this fashion, opening and closing functionality of the package is not impinged upon, as it must not be. Yet, with the covers of the present invention attached to the contact lens package, certain forms of light such as UV light are inhibited from penetrating the package such as package 550 and a contact lens 570 contained in solution inside it. This arrangement preserves the functionality of the polychromic aspects of the lens.

The package described in the above embodiments may also be used to protect contact lenses containing other light sensitive compounds, including light sensitive HEV absorbing compounds.

The foregoing invention is to be understood in conjunction with the appended claims, taking into account all appropriate equivalents.

The following list of the embodiments forms part of the description.

### EMBODIMENTS

1. A contact lens package comprising:
   a bowl for holding a contact lens;
   a film engaging said bowl so as to hold a contact lens between said bowl and the film; and
   and a light management protective cover attached to said bowl, such that said cover controls the type of light which passes through said cover and onto said bowl.
2. The package of embodiment 1 wherein said cover prevents the passage of ultraviolet light.
3. The package of embodiment 1 wherein said bowl is generally translucent.
4. The package of embodiment 1 wherein said cover snaps over said bowl.
5. The package of embodiment 1 wherein said cover is welded to said bowl.
6. The package of embodiment 1 wherein said cover further contains flanges for gripping by the fingers of a user.
7. The package of embodiment 1 wherein said cover is sonically welded to said bowl.
8. A contact lens package comprising:
   a bowl for holding a contact lens;
   a generally translucent cover placed over said bowl; and
   and a light management protective insert attached to said cover, such that said insert controls the type of light which passes through said insert and onto said cover.
9. The package of embodiment 8 wherein said cover prevents the passage of ultraviolet light.
10. The package of embodiment 8 wherein said bowl is generally translucent.
11. The package of embodiment 8 wherein said cover snaps over said bowl.
12. The package of embodiment 8 wherein said cover is welded to said bowl.
13. The package of embodiment 8 wherein said cover further contains flanges for gripping by the fingers of a user.
14. The package of embodiment 8 wherein said cover is welded to said bowl.
15. In combination:
   a contact lens package comprising:
   a bowl for holding a contact lens;
   a film engaging said bowl so as to hold a contact lens between said bowl and the film; and
   and a light management protective cover releasably attached to said bowl, such that said cover controls the type of light which passes through said cover and onto said bowl; and
   a contact lens held within said package.
16. A cover adapted to be placed over the bowl forming the outside of a contact lens package, said cover blocking the passage of ultraviolet light into said bowl.
17. The package of embodiment 15 further including a lidstock attached to the bowl, said lidstock formed from a pressure formable foil.
18. The package of embodiment 17 wherein the pressure formable foil is a laminated polyester or an aluminum foil composite.

## Claims

1. A contact lens package comprising:
a bowl for holding a contact lens;
a film engaging said bowl so as to hold a contact lens between said bowl and the film; and
a light management protective cover attached to said bowl, such that said cover controls the type of light which passes through said cover and onto said bowl.

2. A contact lens package comprising:
a bowl for holding a contact lens;
a generally translucent cover placed over said bowl; and
a light management protective insert attached to said cover, such that said insert controls the type of light which passes through said insert and onto said cover.

3. The package of claim 1 or claim 2 wherein said cover prevents the passage of ultraviolet light.

4. The package of claim 2 wherein said insert prevents the passage of ultraviolet light.

5. The package of any one of claims 1 to 4 wherein said bowl is generally translucent.

6. The package of any one of claims 1 to 5 wherein said cover snaps over said bowl.

7. The package of any one of claims 1 to 5 wherein said cover is welded to said bowl.

8. The package of any one of claims 1 to 7 wherein said cover further contains flanges for gripping by the fingers of a user.

9. The package of any one of claims 1 to 5, and 7 to 8, wherein said cover is sonically welded to said bowl.

10. A contact lens package system comprising:
a contact lens package of claim 1 wherein the light management protective cover is releasably attached to said bowl; and
a contact lens held within said package.

11. A cover adapted to be placed over the bowl forming the outside of a contact lens package, said cover blocking the passage of ultraviolet light into said bowl.

12. The package of any one of claims 1 to 10 wherein the film is attached to the bowl and is formed from a pressure formable foil.

13. The package of claim 12, wherein the pressure formable foil is a laminated polyester or an aluminum foil composite.
